# EUROPEAN PATENT SPECIFICATION

(11) **EP 2 491 782 B1**
(45) Date of publication and mention of the grant of the patent: **06.01.2016**
(21) Application number: 12157065.9
(22) Date of filing: 27.02.2012
(51) Int. Cl.: A01D 46/26

(54) **Beating apparatus, particularly for beating olives and the like**
Schlagvorrichtung, insbesondere zum Schlagen von Oliven und dergleichen
Batteur, en particulier pour battre les olives et similaire

(30) Priority: 28.02.2011 IT PD20110059
(43) Date of publication of application: 29.08.2012
(73) Proprietor: Zanon S.R.L., 35011 Campodarsego PD (IT)
(72) Inventor: Zanon, Franco, 35011 Campodarsego PD (IT)
(74) Representative: Modiano, Micaela Nadia

(56) References cited:
- EP-A1- 0 427 170
- EP-A1- 1 175 823
- EP-A1- 1 943 895
- EP-A2- 2 138 028
- BR-U- 8 101 948
- ES-A1- 2 152 145

## Description

The present invention relates to a beating apparatus, particularly for beating olives and the like.

Beating is a historically-known operation, which is aimed at causing the fruits of a plant to fall, so that they can be harvested.

Beating methods generally involve an operation of agitation of the branches of the plant in order to cause the separation of the fruit therefrom. Such agitation is carried out with the aid of equipment that can be simple canes or rakes, or specialized apparatuses, like modern beaters.

These are provided, at one operational end of an elongated handle, with devices which are provided with rods moved by a motor.

The operator inserts the moving rods between the branches of the plant, so that they shake it, and optionally strike it, thus making the fruits fall to the ground.

Nowadays several types of apparatuses are known for beating, some of which are provided with a discoid head supported by the operational end of the handle and perimetrically supporting rods which rotate in a circular trajectory.

Another apparatus known today has, at the operational end of the handle, a pair of oscillating rake-shaped sectors which are symmetrically pivoted on opposite sides of the operational end.

Motor means actuate the symmetric oscillation of the oscillating sectors, which, when they are inserted between the branches of a plant, agitate them while moreover enabling, thanks to their rake shape, a combing operation thereof, to the advantage of a rapid and effective beating of the fruit.

In one model of beating apparatus, known today, such motor means comprise an electric motor supported at the end of the handle opposite to its operational end, and a mechanical transmission that, running inside the handle, functionally connects the engine to a piston device that actuates the symmetric oscillation of the oscillating sectors.

Although nowadays very appreciated, this apparatus has some aspects that can be improved.

In fact, when both oscillating sectors operate on a branch simultaneously, owing to their symmetric oscillation, the operation of one works against the operation of the other so as to inhibit the effect of shaking on the branch.

In the field of beating the need is thus nowadays felt for apparatuses that enable an effective shaking of the branches while at the same time preventing damage thereto by friction or impact.

A solution known today, devised in order to meet such need, consists in a beating apparatus that comprises
- an elongated handle, provided at one operational end with a body with a head adapted to support two oscillating sectors side by side and substantially aligned which carry beating rods,
- two linkages which operationally interconnect a crank at the adjacent longitudinal ends of the oscillating sectors, so as to impart an oscillatory motion thereto.

The crank is actuated by an electric motor, supported by the supporting body.

This beating apparatus enables an effective shaking of the branches on which it operates, while preventing an opposing action of the beating rods thereupon thanks to their staggered oscillatory movement, which is ensured by the actuation by means of the two linkages moved simultaneously by the crank.

However, it displays room for improvement, in particular in order to meet the need for compactness and structural simplicity which is always felt in the field of beating apparatuses, so as to give it better manageability during use and greater solidity and hence a longer useful life.

A device for causing fruit to fall from tree branches is known from EP 2 138 028 A2.

The aim of the present invention is to provide a beating apparatus, particularly for olives, that meets such need while being more compact than oscillating sector beaters known today.

Within this aim, an object of the invention is to provide a beating apparatus that is more solid than conventional beating apparatuses.

Another object of the invention is to provide a beating apparatus that is simple and easy to use, and can be made at relatively low cost.

This aim and these and other objects which will become more apparent hereinafter are achieved by a beating apparatus, according to the present invention, that has the features set forth in claim 1.

Further characteristics and advantages of the invention will become more apparent from the description of a preferred, but not exclusive, embodiment of the beating apparatus according to the invention, which is illustrated by way of non-limiting example in the accompanying drawings wherein:

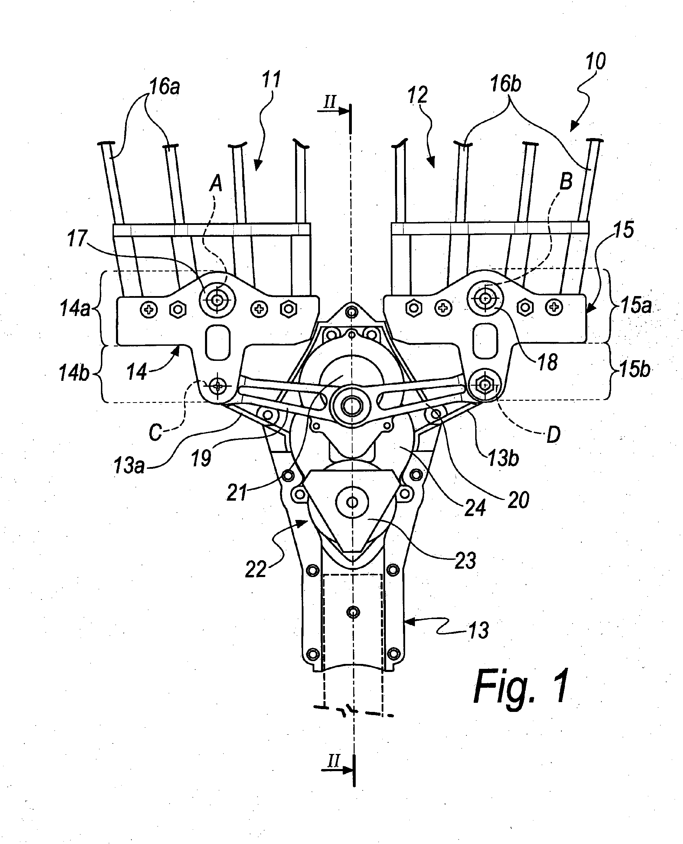

Figure 1 is a front elevation view of the inside of a beating apparatus, according to the invention;

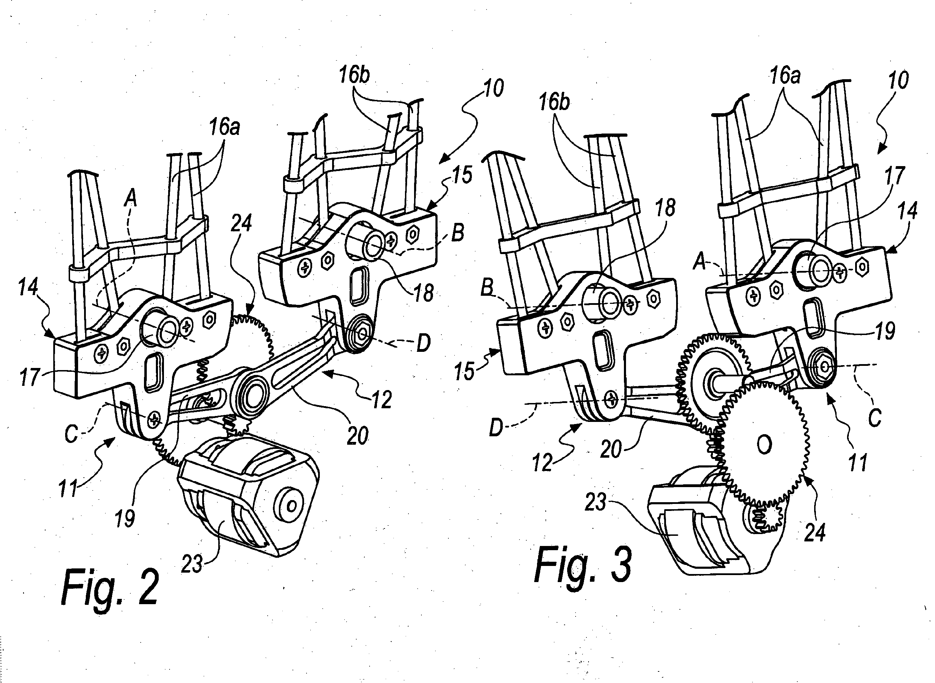

Figure 2 is a first perspective view of components of a beating apparatus, according to the invention;
Figure 3 is a second perspective view of components of a beating apparatus, according to the invention.

With reference to the figures, the reference numeral 10 generally indicates a beating apparatus, particularly for beating olives and the like, that comprises two beating assemblies 11 and 12 which are supported by a beater head body 13.

The beating assemblies 11 and 12 comprise corresponding oscillating sectors, respectively marked 14 and 15, which support beating rods 16a and 16b and which are connected so as to be able to oscillate about the body 13 by means of respective pivots 17 and 18.

The apparatus 10 according to the invention has a particular peculiarity in that the beating assemblies 11 and 12 comprise moreover respective linkages 19 and 20 which functionally connect the respective oscillating sectors 14 and 15 to a crank 21 which is supported by the body 13 and connected to motor means 22.

Thus in particular the body 13 is provided with two arms 13a and 13b which are lateral to the crank 21, the beating assemblies 11 and 12 comprising
- a first one 11 of the beating assemblies 11 and 12, which comprises a first one 14 of the oscillating sectors 14 and 15, which is pivoted to a first one 13a of the arms 13a and 13b by means of a first one 17 of the pivots 17 and 18 and is functionally coupled to the crank 21 by means of a first one 19 of the linkages 19 and 20, and
- a second one 12 of the beating assemblies 11 and 12, which comprises a second one 15 of the oscillating sectors 14 and 15, which is pivoted to the second one 13b of the arms 13a and 13b by means of a second one 18 of the pivots 17 and 18 and is functionally coupled to the crank 21 by means of a second one 20 of the linkages 19 and 20.

Moreover, according to the invention the oscillating sectors 14 and 15 comprise
- first parts, respectively indicated with 14a and 15a, which are adapted for coupling with one end of the rods 16a and 16b, the first parts 14a and 15a being elongated substantially transversely to the rods 16a and 16b, and
- second parts 14b and 15b, for connection to the corresponding linkages 19 and 20, which are pivoted thereto in a position that is spaced transversely from the respective first parts 14a and 14b.

In general, depending on the contingent requirements of implementation, a beating apparatus according to the invention comprises at least one of such beating assemblies, such as for example one, supported by a beater head body, where the beating assembly comprises an oscillating sector, which supports beating rods and is connected so as to be able to oscillate about the body by means of a pivot.

According to the invention the beating assembly comprises a linkage which functionally interconnects the oscillating sector to a crank which is supported by the body and connected to motor means, the oscillating sector being composed of
- a first part for coupling with one end of the rods, which is elongated substantially transversely thereto, and
- a second part for connection to the linkage, which is pivoted thereto in a position spaced transversely from the first part.

Preferably, the pivots 17 and 18 are rotatably connected to the corresponding first parts 14a and 15a in a region thereof which is substantially central with respect to the longitudinal extension thereof.

The second parts 14b and 15b extend substantially transversely from a central region of the first parts 14a and 15a, so as to form substantially a T therewith.

In this manner the oscillating sectors 14 and 15 can be laterally side by side almost touching each other so that the respective groups of rods 16a and 16b, during their staggered oscillation, operate in the entire region in front of the body 13 into which the rods 16a and 16b protrude.

Advantageously, the portions of the first parts 14a and 15a which are connected to the rods 16a and 16b are substantially intermediate between the respective pivoting axes A and B of the sectors 14 and 15 oscillating about the body 13, which are defined by the axes of the pivots 17 and 18, and the pivoting axes C and D of the sectors 14 and 15 oscillating about the linkages 19 and 20, the pivoting axes A and B being substantially parallel to the pivoting axes C and D.

The motor means 22 preferably comprise
- an electric motor 23, which is supported by the body 13 and
- a gearmotor 24 for transmitting the motion between the electric motor 23 and the crank 21 that it interconnects.

In practice it has been found that the invention fully achieves the intended aim and objects by providing a beating apparatus, particularly for olives, that is more compact than the oscillating sector beaters known today, thanks to the fact that the linkages are connected to the T-shaped oscillating sectors at the free ends of the second parts which are spaced from the first parts that support the rods, so as to be able to have the oscillating sectors closely side by side in a position above the crank and the motor means that actuate it to make the rods oscillate.

Moreover, a beating apparatus according to the invention is more solid than conventional beating apparatuses but is likewise simple and easy to use, and can be produced at relatively low cost.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. PD2011A000059 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A beating apparatus (10), particularly for beating olives and the like, comprising at least one beating assembly (11, 12) supported by a beater head body (13), said at least one beating assembly (11, 12) comprising an oscillating sector (14, 15) which supports beating rods (16a, 16b) and is connected by means of a pivot (17, 18) to said bod (13) so as to be able to oscillate about said body (13),
wherein said at least one beating assembly (11, 12) comprises a linkage (19, 20) which functionally connects said oscillating sector (14, 15) to a crank (21) which is supported by said body (13) and connected to motor means (22),
said oscillating sector (14, 15) being composed of a first part (14a, 15a) for coupling with one end of said rods (16a, 16b), which is elongated substantially transversely thereto,
and wherein
said pivot (17, 18) is connected rotatably to said first part (14a, 15a) in a region thereof that is substantially central with respect to its longitudinal extension, and said motor means (22) comprises a gearmotor (24) that has, eccentrically protruding from a gearwheel, a pin that so constitutes said crank (21) and to which pin an end of said linkage (19, 20 is pivoted, thereby eccentric rotation of said pin is changed in reciprocating motion of said linkage (19,20) that makes said oscillating sector (14, 15) to oscillate about said pivot (17, 18),
**characterized in that** said oscillating sector (14, 15) further comprises a second part (14b, 15b) for connection to said linkage (19, 20), which is pivoted thereto in a position that is spaced transversely from said first part (14a, 15a), said second part (14b, 15b) extending substantially transversely from a central region of said first part (14a, 15a) so that said oscillating sector (14, 15) is substantially T- shaped and has the free end thereof pivoted (C, D) to an end of said linkage (19, 20) that is opposite to the end of such linkage (19, 20) pivoted to said pin.

2. The beating apparatus according to claim 1, **characterized in that** the portion of said first part (14a, 15a) that is connected to said rods (16a, 16b) is substantially intermediate between the axis (A) for the pivoting of said oscillating sector (14, 15) to said body (13), which is defined by the axis of said pivot (17, 18), and the axis (C, D) for the pivoting of said oscillating sector (14, 15) to said linkage (19, 20), said axes being substantially parallel.

3. The beating apparatus according to one or more of the preceding claims, **characterized in that** said motor means (22) comprise
- an electric motor (23), which is supported by said body (13) and
- said gearmotor (24) for transmitting the motion between said electric motor (23) and said crank (21) that it interconnects.

4. The beating apparatus according to one or more of the preceding claims, **characterized in that** said body (13) is provided with two arms (13a, 13b) which are lateral to said crank (21), said at least one beating assembly (11, 12) comprising
- a first one (11) of said beating assembly (11, 12), which comprises a first one (14) or said oscillating sector (14, 15), which is pivoted to a first one (13a) of said arms (13a, 13b) by means of a first one (17) of said pivot (17, 18) and is functionally coupled with said crank (21) by means of a first one (19) of said linkage (19, 20), and
- a second one (12) of said beating assembly (11, 12), which comprises a second one (15) of said oscillating sector (14, 15), which is pivoted to the second one (13b) of said arms (13a, 13b) by means of a second one (18) of said pivot (17, 18) and is functionally coupled to said crank (21) by means of a second one (20) of said linkage (19, 20).

## Patentansprüche

1. Eine Schlagvorrichtung (10), insbesondere zum Schlagen von Oliven und dergleichen, die mindestens einen Schlagaufbau (11, 12) umfasst, der von einem Schlagkopf-Körper (13) getragen wird, wobei der mindestens eine Schlagaufbau (11, 12) einen schwingenden Abschnitt (14, 15) umfasst, der Schlagstöcke (16a, 16b) trägt und über einen Drehzapfen (17, 18) mit dem Körper (13) verbunden ist, um so um den Körper (13) schwingen zu können,
wobei der mindestens eine Schlagaufbau (11, 12) ein Verbindungsglied (19, 20) umfasst, das den schwingenden Abschnitt (14, 15) funktional mit einer Kurbel (21) verbindet, die von dem Körper (13) getragen wird und mit Motormitteln (22) verbunden ist,
wobei der schwingende Abschnitt (14, 15) aus einem ersten Teil (14a, 15a) zur Kopplung mit einem Ende der Stöcke (16a, 16b) besteht, das im Wesentlichen quer dazu verlängert ist,
und wobei
der Drehzapfen (17, 18) drehbar mit dem ersten Teil (14a, 15a) in einem Bereich davon verbunden ist, der im Wesentlichen mittig im Verhältnis zu seiner Längsausdehnung ist, und dass Motormittel (22) einen Getriebemotor (24) umfasst, der, exzentrisch aus einem Getrieberad herausragend, einen Stift hat, der so die Kurbel (21) bildet und mit dem ein Ende des Verbindungsglieds (19, 20) gelenkig verbunden ist, wodurch die exzentrische Drehung des Stifts in eine Hin- und Herbewegung des Verbindungsglieds (19, 20) umgewandelt wird, die den schwingenden Abschnitt (14, 15) veranlasst, um den Drehzapfen (17, 18) zu schwingen,
**dadurch gekennzeichnet, dass** der schwingende Abschnitt (14, 15) weiter einen zweiten Teil (14b, 15b) zur Verbindung mit dem Verbindungsglied (19, 20) umfasst, das gelenkig in einer Position damit verbunden ist, die transversal von dem ersten Teil (14a, 15a) beabstandet ist, wobei der zweite Teil (14b, 15b) sich im Wesentlichen quer von einem zentralen Bereich des ersten Teils (14a, 15a) erstreckt, so dass der schwingende Abschnitt (14, 15) im Wesentlichen T-förmig ist und sein freies Ende gelenkig (C, D) mit einem Ende des Verbindungsglieds (19, 20) verbunden ist, das dem Ende dieses Verbindungsglieds (19, 20) gegenüberliegt, das gelenkig mit dem Stift verbunden ist.

2. Die Schlagvorrichtung gemäß Anspruch 1, **dadurch gekennzeichnet, dass** der Abschnitt des ersten Teils (14a, 15a), der mit den Stöcken (16a, 16b) verbunden ist, im Wesentlichen intermediär ist zwischen der Achse (A) zur gelenkigen Verbindung des schwingenden Abschnitts (14, 15) mit dem Körper (13), die durch die Achse des Drehzapfens (17, 18) bestimmt wird, und der Achse (C, D) zur gelenkigen Verbindung des schwingenden Abschnitts (14, 15) mit dem Verbindungsglied (19, 20), wobei die Achsen im Wesentlichen parallel sind.

3. Die Schlagvorrichtung gemäß einem oder mehreren der obigen Ansprüche, **dadurch gekennzeichnet, dass** die Motormittel (22) Folgendes umfassen:
- einen Elektromotor (23), der von dem Körper (13) getragen wird, und
- den Getriebemotor (24) zur Übertragung der Bewegung zwischen dem Elektromotor (23) und der Kurbel (21), die er miteinander verbindet.

4. Die Schlagvorrichtung gemäß einem oder mehreren der obigen Ansprüche, **dadurch gekennzeichnet, dass** der Körper (13) mit zwei Armen (13a, 13b) ausgestattet ist, die seitlich zu der Kurbel (21) sind, wobei die mindestens eine Schlagvorrichtung (11, 12) Folgendes umfasst:
- eine erste (11) der Schlagvorrichtung (11, 12), die einen ersten (14) des schwingenden Abschnitts (14, 15) umfasst, der gelenkig mit einem ersten (13a) der Arme (13a, 13b) über einen ersten (17) des Drehzapfens (17, 18) verbunden ist und funktional mit der Kurbel (21) über ein erstes (19) des Verbindungsglieds (19, 20) gekoppelt ist, und
- eine zweite (12) der Schlagvorrichtung (11, 12), die einen zweiten (15) des schwingenden Abschnitts (14, 15) umfasst, der gelenkig mit dem zweiten (13b) der Arme (13a, 13b) über einen zweiten (18) des Drehzapfens (17, 18) verbunden ist und funktional mit der Kurbel (21) über ein zweites (20) des Verbindungsglieds (19, 20) gekoppelt ist.

## Revendications

1. Appareil de battage (10), particulièrement destiné au battage d'olives, et analogues, comprenant au moins un ensemble de battage (11, 12) supporté par un corps (13) formant tête de battage, ledit au moins un ensemble de battage (11, 12) comprenant un secteur oscillant (14, 15) qui supporte des tiges de battage (16a, 16b) et qui est en prise, au moyen d'un pivot (17, 18), avec ledit corps (13) de façon à pouvoir osciller autour dudit corps (13),
dans lequel ledit au moins un ensemble de battage (11, 12) comprend une liaison (19, 20) qui assure une prise fonctionnelle entre ledit secteur oscillant (14, 15) et une manivelle (21) qui est supportée par ledit corps (13) et qui est en prise avec un moyen formant moteur (22),
ledit secteur oscillant (14, 15) étant composé d'une première partie (14a, 15a) permettant un couplage avec une extrémité desdites tiges (16a, 16b) qui est allongée sensiblement transversalement à ce dernier,
et dans lequel
ledit pivot (17, 18) est relié mobile en rotation à ladite première partie (14a, 15a) dans sa région qui est sensiblement centrale par rapport à son prolongement longitudinal, et ledit moyen formant moteur (22) comprend un moteur à engrenage (24) qui comporte, en saillie de manière excentrée d'une roue d'engrenage, une broche qui constitue ainsi ladite manivelle (21) et sur laquelle pivote une broche se trouvant sur une extrémité de ladite liaison (19, 20), ce par quoi une rotation excentrée de ladite broche est transformée en un mouvement de va-et-vient de ladite liaison (19, 20) qui amène ledit secteur oscillant (14, 15) à osciller autour dudit pivot (17, 18),
**caractérisé en ce que** ledit secteur oscillant (14, 15) comprend en outre une seconde partie (14b, 15b) de prise avec ladite liaison (19, 20), qui pivote par rapport à cette dernière dans une position qui est transversalement espacée de ladite première partie (14a, 15a), ladite seconde partie (14b, 15b) s'étendant sensiblement transversalement d'une région centrale de ladite première partie (14a, 15a), de sorte que ledit secteur oscillant (14, 15) a sensiblement une forme de T et que son extrémité libre pivote (C, D) sur une extrémité de ladite liaison (19, 20) qui est opposée à l'extrémité de ladite liaison (19, 20) qui pivote sur ladite broche.

2. Appareil de battage selon la revendication 1, **caractérisé en ce que** la partie de ladite première partie (14a, 15a) qui est reliée auxdites tiges (16a, 16b) se trouve sensiblement entre l'axe (A) de pivot dudit secteur oscillant (14, 15) par rapport audit corps (13), qui est défini par l'axe dudit pivot (17, 18), et l'axe (C, D) du pivotement dudit secteur oscillant (14, 15) par rapport à ladite liaison (19, 20), lesdits axes étant sensiblement parallèles.

3. Appareil de battage selon une ou plusieurs des revendications précédentes, **caractérisé en ce que** ledit moyen formant moteur (22) comprend
- un moteur électrique (23), qui est supporté par le dit corps (13), et
- ledit moteur à engrenage (24) destiné à transmettre le mouvement entre ledit moteur électrique (23) et ladite manivelle (21) qui est en prise avec ces deux derniers.

4. Appareil de battage selon une ou plusieurs des revendications précédentes, **caractérisé en ce que** ledit corps (13) est pourvu de deux bras (13a, 13b) qui sont latéraux par rapport à ladite manivelle (21), ledit au moins un ensemble de battage (11, 12) comprenant
- un premier ensemble de battage (11) dudit ensemble de battage (11, 12), qui comprend un premier secteur oscillant (14) dudit secteur oscillant (14, 15), qui pivote par rapport à un premier bras (13a) desdits bras (13a, 13b) au moyen d'un premier pivot (17) dudit pivot (17, 18) et qui est fonctionnellement couplé à ladite manivelle (21) au moyen d'une première liaison (19) de ladite liaison (19, 20), et
- un second ensemble de battage (12) dudit ensemble de battage (11, 12), qui comprend un second secteur oscillant (15) dudit secteur oscillant (14, 15), qui pivote par rapport à un second bras (13b) desdits bras (13a, 13b) au moyen d'un second pivot (18) dudit pivot (17, 18) et qui est fonctionnellement couplé à ladite manivelle (21) au moyen d'une seconde liaison (20) de ladite liaison (19, 20).
